Europäisches Patentamt

European Patent Office

Office européen des brevets

(19)

(11) **EP 1 080 309 B1**

(12) **EUROPÄISCHE PATENTSCHRIFT**

(45) Veröffentlichungstag und Bekanntmachung des Hinweises auf die Patenterteilung:
**31.07.2002 Patentblatt 2002/31**

(21) Anmeldenummer: **99957947.7**

(22) Anmeldetag: **28.10.1999**

(51) Int Cl.⁷: **F02P 5/15**, F02P 3/05

(86) Internationale Anmeldenummer:
**PCT/DE99/03459**

(87) Internationale Veröffentlichungsnummer:
**WO 00/57052 (28.09.2000 Gazette 2000/39)**

(54) **ZÜNDSTEUERVORRICHTUNG UND -VERFAHREN**

IGNITION CONTROL DEVICE AND METHOD

PROCEDE ET DISPOSITIF DE COMMANDE D'ALLUMAGE

(84) Benannte Vertragsstaaten:
**DE FR IT**

(30) Priorität: **22.03.1999 DE 19912741**

(43) Veröffentlichungstag der Anmeldung:
**07.03.2001 Patentblatt 2001/10**

(73) Patentinhaber: **ROBERT BOSCH GMBH**
**70442 Stuttgart (DE)**

(72) Erfinder:
• **HAUSSMANN, Martin**
**D-74343 Sachsenheim (DE)**
• **FRIEDMANN, Harry**
**D-71272 Renningen (DE)**

(56) Entgegenhaltungen:
**EP-A- 0 893 591**       **US-A- 4 133 475**
**US-A- 4 794 900**       **US-A- 4 996 959**

EP 1 080 309 B1

**Beschreibung**

STAND DER TECHNIK

Die vorliegende Erfindung betrifft eine Zündsteuervorrichtung sowie ein entsprechendes Zündsteuerverfahren.

Obwohl auf beliebige Zündsteuerungen anwendbar, werden die vorliegende Erfindung sowie die ihr zugrundeliegende Problematik in bezug auf ein an Bord eines Kraftfahrzeuges befindliches Motorsteuergerät erläutert.

Zündsteuervorrichtungen zum Steuern von Zündereignissen für Zündspulenzündsysteme bzw. -einrichtungen besitzen im wesentlichen zwei Steuerfunktionen, die Steuerung einer gewünschten Zündenergie über die Einschaltdauer bzw. Ladedauer der Zündspule sowie das winkelrichtige Steuern eines Zündimpulses über den Abschaltzeitpunkt bzw. das Ladeende der Zündspule.

Die Zündenergie, die bei Spulenzündanlagen über eine Ladezeit der Zündspule zugemessen wird, ist entsprechend der am elektrischen Schaltkreis der Spule anliegenden Bordnetzspannung sowie der Zeitkonstante des elektrischen Schaltkreises unterschiedlich lang.

Üblicherweise sind die jeweiligen Sollwerte in Abhängigkeit von der Drehzahl und möglichen weiteren Motorparametern als Kennlinienfeld im Steuergerät abgelegt.

Übliche Steuergeräte verfügen zur Ausgabe von Winkelsignalen über einen Winkelgeberrad, das winkelmäßig äquidistante Impulse an die Zündsteuervorrichtung liefert. Aus Gründen der Rechenlaufzeit kann die Berechnung der Zündereignisse aber in den meisten Zündsteuervorrichtungsarchitekturen nur segmentweise erfolgen, wobei ein Segment das Winkelintervall von 720° der Kurbelwelle geteilt durch die Zylinderzahl ist, also bei einem Vierzylindermotor beispielsweise 180°. Daher können die in der Berechnung ermittelten Winkellagen der Zündereignisse zwar über das Winkelgeberrad und die bei den Zündsteuervorrichtungen üblichen Timer/Counter(Zeitgeber/Zähler)-Schaltungen hinreichend genau ausgemessen werden, die Berechnung selbst geht aber von einer erfaßten Drehzahl aus.

Üblicherweise werden die zylinderindividuellen Steuergrößen für die Zündausgabe also einmal pro Zündintervall bzw. Segment berechnet und über einen Zylinderzähler mit der Zündausgabe synchronisiert. Das heißt ein Zylinderzähler informiert die Zündsteuervorrichtung darüber für welchen Zylinder das nächste anzusteuernde Zündsignal, bestehend aus dem Ladebeginn und Ladeende (also der Zündung), bestimmt ist.

Für die Berechnung der Zündereignisse ist stets eine Prognose des Winkel/Zeit-Verlaufs der Drehbewegung der Brennkraftmaschine notwendig, da einerseits über eine definierte Ladezeit die Energie im Zündsystem definiert wird und andererseits das Ende der Ladezeit an einer definierten Zündwinkellage liegen muß. Man muß also wissen, welchem Winkelintervall die Ladezeit nach Beginn des Ladens entsprechen wird. Um diese Winkelbewegung beschreiben zu können wird eine Information über die Drehzahl der Maschine genötigt.

Bei den meisten heute üblichen Zündsteuervorrichtungen für Ottomotoren wird diese Information einmal pro Zündabstand zu einem definierten Drehzahlmeßort mit fixer Winkellage bezüglich dem OT (oberer Totpunkt) des nächsten zu zündenden Zylinders bestimmt. Wird die Ladezeit und/oder die Drehzahl größer, so rückt der Beginn der Ladezeit zunehmend gegen die Winkellage des Drehzahlmeßorts, bis der Drehzahlmeßort schließlich im Ladeintervall selbst liegt und die Drehzahlinformationen aus dem Vorsegment für die Zündereignisrechnung verwendet werden müssen. In diesem Falle wird von überlappender Zündausgabe gesprochen.

Ist der Überlappungsmodus erreicht, so muß der Zylinderzähler um einen Offset korrigiert werden. Das heißt die Zündereignisse für ein dem aktuellen Zündintervall folgendes Zündintervall müssen bereits im aktuellen Zündintervall angesteuert werden. Wird im aktuellen Zündintervall von der Zündausgabe erkannt, daß der Ladebeginn des aktuellen Ereignisses eigentlich in der Vergangenheit liegt, so muß im aktuellen Zündintervall der Ladebeginn für den aktuellen Zylinder sofort und der Ladebeginn des Folgezylinders verzögert ausgelöst werden. Gerade in diesem Übergang von nicht überlappendem Betrieb in die Überlappung fehlt bei vielen Zündausgabeverfahren die Information über Zündwinkel und Ladedauer des Folgezylinders, so daß für den Zündwinkel und die Ladezeit des Folgezylinders die Werte des aktuellen Zylinders verwendet werden.

Genauere Verfahren rechnen hier die Soll-Werte der Folgezylinder mit den Daten des aktuellen Zündabstandes parallel mit und puffern diese für dem Fall des Übergangs in den Überlappungsmodus. Bislang fehlt aber eine eindeutige, transparente Struktur die dem Systemanwender, zum Beispiel dem Applikateur, aufzeigt, welche Sollnerte für die Zündausgabe verwendet werden. Ferner fehlt ein einheitliches, universell einsetzbares Verfahren, das eventuell auch von anderen Ausgabeeinrichtungen mitgenutzt werden könnte.

Das Dokument US 4 794 900 offenbart eine Zündsteuervorrichtung, eine Drehzahlerfassungseinrichtung, eine Winkelerfassungseinrichtung, eine Berechnungseinrichtung zum Berechnen eines der erfaßten Drehzahl entsprechenden Zündwinkels sowie einer Ladezeit und eines Ladebeginnwinkels und einer Speichereinrichtung zum Speichern der berechneten Zündwinkel aller Zylinder.

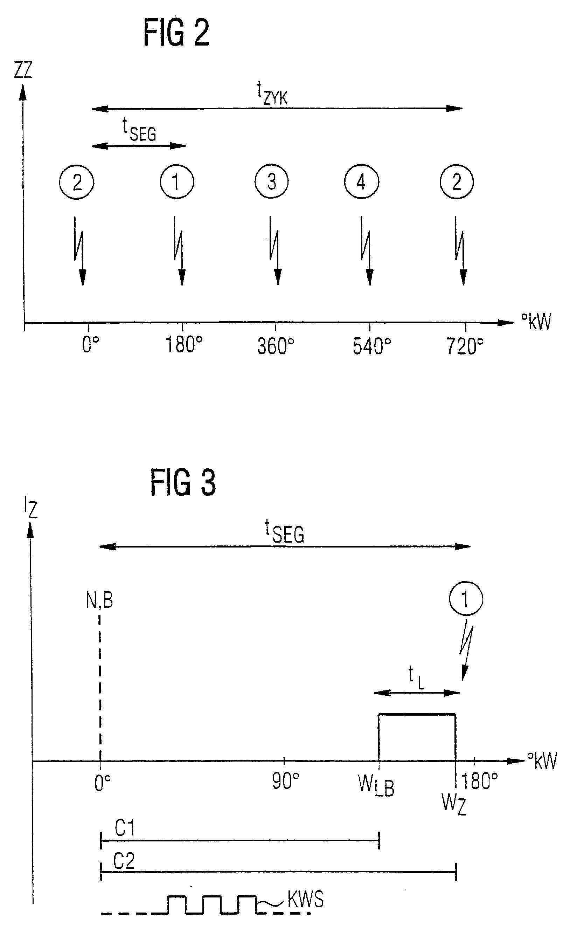

Zur Erläuterung der Problematik zeigt Fig. 2 eine schematische Darstellung der Zündfolge bei einer Vierzylinder-Brennkraftmaschine.

In Fig. 2 ist auf der x-Achse der Kurbelwinkel KW in ° aufgetragen und auf der y-Achse der Zündverlauf ZZ, welcher die Reihenfolge ...-2-1-3-4-2-... aufweist. Ein vollständiger Zyklus beträgt 720° KW entsprechend einer Zykluszeit $t_{ZYK}$. Ein Segment beträgt 720°KW/4 = 180° entsprechend einer Segmentzeit $t_{SEG}$.

Fig. 3 zeigt eine schematische Darstellung der Zündsteuerungs-Funktionsabläufe im Segment des ersten Zylinders der Vierzylinder-Brennkraftmaschine hinsichtlich der Ansteuerung des Zündspulenstroms $I_Z$.

Bei 0° wird die Drehzahl N erfaßt und unmittelbar danach beim Berechnungszeitpunkt B werden die Ladezeit $t_L$ sowie der Zündwinkel $w_Z$ (näherungsweise gleich dem Schließendwinkel bzw. Ladeendwinkel) aus einem Kennlinienfeld entnommen bzw. berechnet.

Danach wird der Schließ- bzw. Ladebeginnwinkel $w_{LB}$ aus der Beziehung

$$w_{LB} = w_Z - t_L \cdot \omega$$

unter Annahme einer gleichförmigen Bewegung ermittelt, wobei $\omega$ die der Drehzahl N entsprechende Winkelgeschwindigkeit ist. Aus Gründen der Rechenlaufzeit wird diese zeitliche und winkelmäßige Lage der Zündereignisse nur einmal pro Zündabstand berechnet.

Zum Festlegen des Ladebeginnwinkels wird mit einem Zähler C1 ausgehend von 0° der Winkel $w_{LB}$ über das Kurbelwellensensorsignal KWS erfaßt und bei Erreichen des Winkels $w_{LB}$ die Endstufe der Zündspule angesteuert. Mit einem weiteren Zähler C2 wird ausgehend von 0° der Winkel $w_Z$ über das Kurbelwellensensorsignal KWS erfaßt und bei Erreichen des Winkels $w_Z$ die Ansteuerung unterbrochen.

Im oben erwähnten Überlappungsmodus wird erkannt, daß das durch den Zähler C1 auszulösende Ereignis in der Vergangenheit liegt, und daher der Ladebeginn unmittelbar bei 0° gestartet.

VORTEILE DER ERFINDUNG

Die erfindungsgemäße Zündsteuervorrichtung mit den Merkmalen des Anspruchs 1 und das entsprechende Zündsteuerverfahren gemäß Anspruch 5 weisen gegenüber den bekannten Lösungsansätzen den Vorteil auf, daß sie eine einheitliche, transparente und in einer Motorsteuerungplattform universell einsetzbare Vorgehensweise zur Steuerung der Übergabe zylinderspezifischer Steuergrößen an die Zündausgabe ermöglichen. Die Prozedur soll kann dabei ggfs. auch von anderen Ausgabeeinrichtungen, wie z.B. der Einspritzausgabe, mitverwendet werden. Die Übergabe der Werte an die Ausgabeeinrichtung ist nachvollziehbar.

Die der vorliegenden Erfindung zugrundeliegende Idee besteht darin, daß die Verwaltung der Zündereignisse in zwei Speicherblöcken durchgeführt wird.

In einen ersten Speicherblock, der als einfacher Array aufgebaut ist, werden die Sollwerte der Zündereignisse für den sich im aktuellen Segment auf seinen Zünd-OT zubewegenden Zylinder und alle Folgezylinder von der Zündsteuervorrichtung abgespeichert.

Das Zündausgabeverfahren erkennt aus seinen internen Zuständen heraus, welcher Überlappungsgrad aktiv ist und setzt einen Überlappungszähler.

Ein zweiter Speicherblock ist als FIFO-Speicher (First In First Out Speicher - Schieberegister) organisiert. Die FI-FO-Elemente werden mit jedem Zündintervall um ein Element nach unten geschoben. Der Überlappungszähler definiert dasjenige Element des ersten Speicherblocks, das in das oberste Element des FIFO-Speichers kopiert wird.

Anstatt wie beim Stand der Technik üblich erhält die Zündausgabe den jeweiligen Zündwinkel nicht direkt aus dem ersten Speicherblock der Zündsteuervorrichtung, sondern aus dem Zündwinkel-FIFO-Speicher, der als eigenständige Hardware oder als ein von der Controllerhardware unabhängig von der CPU-Laufzeit angesteuerter FIFO-Bereich realisiert sein kann.

Besondere Vorteile sind folgende. Beim Übergang in einen höheren Überlappungsgrad werden zylinderspezifische Zündwinkeländerungen berücksichtigt. Die Steuerung der Werteübergabe erfolgt über Speicherbereiche, nicht über temporäre Puffer. Speicherbereiche werden von den gängigen Applikationssystemen üblicherweise sichtbar gemacht, das heißt die Ereignisrechnung ist für den Applikateur nachvollziehbar. Vor allem der notwendigerweise im Übergang in die Überlappung auftretende Verlust an Drehzahlaktualität und die damit verbundenen Toleranzen sind damit nachprüfbar. Die bei Microcontrollern gängigen on-chip Hardware-Schaltungen erlauben die Verwaltung von FIFO-Speichern ohne Eingriff der CPU. Das Verfahren kann somit nahezu Laufzeitneutral ausgeführt werden. Der Array/ FIFO-Mechanismus kann auch von anderen Ausgabemethoden, wie etwa der Einspritzausgabe genutzt werden, in denen Segmentüberlappungen auftreten. Über den Zündwinkelarray und den Überlappungszähler kann eine Überlappung in einem Folgesegment vorhergesehen werden und ein Fehler beim Übergang in den Überlappungsmodus vermieden werden.

In den Unteransprüchen finden sich vorteilhafte Weiterbildungen und Verbesserungen der in Anspruch 1 angegebenen Zündsteuervorrichtung bzw. des in Anspruch 5 angegebenen Zündsteuerverfahrens.

Gemäß einer bevorzugten Weiterbildung ist eine Prognoseeinrichtung zum Prognostizieren einer Überlappung im folgenden Zündzyklus vorgesehen.

Gemäß einer weiteren bevorzugten Weiterbildung ist der Zündwinkel-FIFO-Speicher softwaremäßig in einem Schreib/Lese-Speicher realisiert.

Gemäß einer weiteren bevorzugten Weiterbildung ist die Kopiereinrichtung durch einen Burstmechanismus in einem Microcontroller realisiert.

ZEICHNUNGEN

Ausführungsbeispiele der Erfindung sind in den Zeichnungen dargestellt und in der nachfolgenden Beschreibung näher erläutert.

Es zeigen:

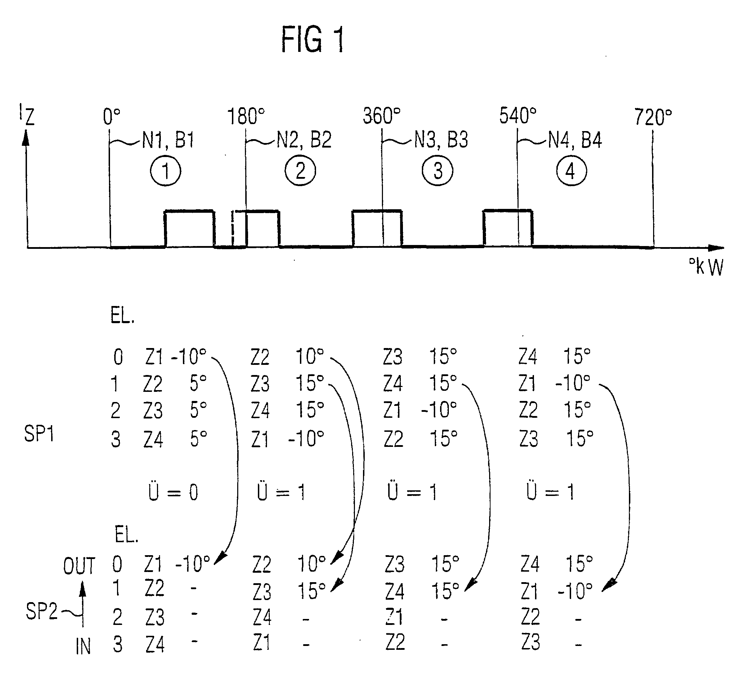

Fig. 1     ein Zeitablaufdiagramm zum Erläutern eines Ausführungsbeispiels der vorliegenden Erfindung;

Fig. 2     eine schematische Darstellung der Zündfolge bei einer Vierzylinder-Brennkraftmaschine; und

Fig. 3     eine schematische Darstellung der Zündsteuerungs-Funktionsabläufe im Segment des ersten Zylinders der Vierzylinder-Brennkraftmaschine.

BESCHREIBUNG DER AUSFÜHRUNGSBEISPIELE

In den Figuren bezeichnen gleiche Bezugszeichen gleiche oder funktionsgleiche Elemente.

Fig. 1 zeigt ein Zeitablaufdiagramm zum Erläutern eines Ausführungsbeispiels der vorliegenden Erfindung.

Insbesondere zeigt Fig. 1 das Timing für eine Zündfolge für eine Vierzylinder-Brennkraftmaschine, also mit 4 Segmenten zu je 180°, bei der Zylinder 1 eine extreme Klopfspätverstellung aufweist und bei der über eine Frühverstellung des Zündwinkels Drehmoment aufgebaut wird.

Die Vierzylinder-Brennkraftmaschine wird mit einer auf einer Spulenzündung basierenden Einzelfunkenzündung betrieben. Dadurch kann der Beginn der Ladephase im Ausführungsbeispiel maximal 3 Segmente vor dem Zündsignal-Segment liegen, da sonst eine minimale Offenzeit (kein Bestromen) der Zündanlage unterschritten werden könnte. Der Maximalwert des Überlappungszählers Ü liegt daher bei 3, wobei Ü = 0 keine Überlappung bedeutet. Die beiden Speichereinrichtungen Zündwinkel-Speicherarray SP1 und Zündwinkel-FIFO-Speicher SP2 sind daher jeweils 4 Elemente tief, d.h. Element EL 0, 1, 2, 3.

Die Zündsteuervorrichtung erfaßt am Anfang jedes Segments die Drehzahl N1, N2, N3 bzw. N4 und rechnet dann bei B1, B2, B3 bzw. B4 die Zündwinkel und Ladezeiten sowie Ladewinkel für die Zündung im aktuellen Segment bzw. Zündintervall und für die Zündungen in den nächsten drei Segmenten für die Folgezylinder aus.

Der erste Zylinder, der sich auf den Zünd-OT zu bewegt, hatte in der Vergangenheit eine starke Klopfneigung gezeigt, und der Zündwinkel wird daher auf einen späten Winkelwert von -10° eingestellt. Für die drei Folgezylinder werden frühere Zündwinkel von jeweils 5° berechnet, die aber noch deutlich später als das Zündwinkeloptimimum liegen. Hier könnte im ersten Segment etwa von der Antiruckelfunktion eine Momentenreduktion angefordert werden. Da vom Vorsegment der Überlappungszähler Ü noch auf Null steht, wird der späte Zündwinkel -10° für den ersten Zylinder in den das 0-te Element EL 0 des Zündwinkel-FIFO-Speichers SP2 kopiert. Die Einleseadresse ergibt sich also aus dem erkannten Überlappungsgrad.

Das Zündereignis wird vom Zündwinkel-FIFO-Speicher SP2 an die Ausgabelogik der Zündausgabe nach einer entsprechenden Abfrage übergeben, die letztendlich die Zündsignale ansteuert. Parallel dazu erhält die Zündausgabe von der Komponentensteuerung die Ladezeit. Die Zündausgabe vergleicht die Drehzahl aus der Drehzahlerfassung N1 mit der Ladezeit und stellt fest, daß der Schließbeginnwinkel für die Zündung des ersten Zylinders noch in das erste Segment paßt. Der Überlappungszähler Ü bleibt daher auf Null.

Der Zündwinkel-FIFO-Speicher SP2 wird nach der Ausgabe am Beginn des zweiten Segments um ein Element nach unten (in Richtung OUT) geschoben. Im zweiten Segment werden wiederum die Zündereignisse für das aktuelle Segment und die Folgesegmente berechnet. Der Soll-Zündwinkel für den aktuellen Zylinder springt schlagartig nach früh, da zum Beispiel aus Gründen der Laufruhe (etwa wieder durch die Antiruckelfunktion, die ein Rückpendeln der Maschine verhindern will) wieder Moment aufgebaut werden soll.

Die Zündausgabe wertet die Drehzahlinformation der zweiten Drehzahlerfassung N2 und die Soll-Ladezeit aus und stellt fest, daß der Ladebeginn der aktuellen Zündung des zweiten Zylinders eigentlich in der Vergangenheit, also im ersten Segment liegen müßte. Die Zündausgabe entschließt sich im Beispiel dazu sofort mit dem Laden zu beginnen und den Zündwinkel exakt im zweiten Segment auszugeben. Gleichzeitig erkennt die Zündausgabe auf einfache Überlappung Ü = 1.

Beim Übergang in diesen nächsthöheren Überlappungsmodus sind zwei die Elemente EL 0 und EL 1 des Zündwinkel-Speicherarrays SP1 in den Zündwinkel-FIFO-Speicher SP2 zu kopieren. Die Speicherlogik (kein aktives Eingreifen der Ausgabemethoden ist notwendig) kopiert also das nullte Element EL 0 und das erste Element EL 1 des Zündwinkelarrays SP1 in den Zündwinkel-FIFO-Speicher SP2 und errechnet aus letzterem Wert unmittelbar einen erneuten Ladebeginn, diesmal für den Folgezylinder, den dritten Zylinder.

Mit dem Aufruf der Drehzahlerfassung N3 wird der Zündwinkel-FIFO-Speicher SP2 wieder um ein Element nach unten geschoben. Die Drehzahlerfassung wird dabei stets von einer separaten Drehzahlerfassungseinrichtung getriggert. Da der Überlappungszähler jetzt auf dem Wert Ü = 1 steht, wird beim automatischen Kopiervorgang, der ebenfalls von der Drehzahlerfassungseinrichtung getriggert wird, das erste Element EL 1, hier 15°, des Zündwinkelarrays SP1 in das erste Element EL 1 des Zündwinkel-FIFO-Speichers SP2 übertragen und dieses Element der Berechnungsprozedur für den Ladebeginn übergeben.

Ein analoges Vorgehen geschieht am Beginn des vierten Segments, wo das erste Element EL 1, hier -10°, des Zündwinkelarrays SP1 in das erste Element EL 1 des Zündwinkel-FIFO-Speichers SP2 übertragen wird und dieses Element der Berechnungsprozedur für den Ladebeginn übergeben wird.

Allgemein sei bemerkt, daß bei einem Übergang in einen höheren Überlappungsmodus n einmalig die Elemente EL 0, EL 1, ..., EL n - also auch die Zwischenüberlappungsgrade - zu kopieren sind und dann innerhalb des gleichen Überlappungsmodus n nur noch das Element EL n.

Umgekehrt wird beim Übergang in einen niedrigeren Überlappungsmodus j lediglich nur noch bis zum entsprechenden tieferen Element EL j kopiert. Ändert sich also im obigen Beispiel der Überlappungsgrad von Ü = 1 auf Ü = 0 beim Übergang vom vierten auf den ersten Zylinder, dann wird nur das 0-te Element des Zündwinkel-FIFO-Speichers SP2 überschrieben.

Soll das beschriebene Verfahren eingesetzt werden, so muß das Ausgabeverfahren also über eine Berechnungseinrichtung zur Berechnung des Ladebeginns und eine Berechnungseinrichtung zur Berechnung/Ausgabe des Zündwinkels verfügen. Bei einer rein softwaremäßigen Umsetzung der Ausgabemethode sind die entsprechenden Berechnungspfade eindeutig zu trennen. Der Ladebeginnmethode wird Überlappungszähler und Ladezeit übergeben. Die Ladebeginnmethode greift dann auf das über den Überlapungszähler adressierte Arrayelement zu und überprüft damit, ob der Überlappungsgrad noch gültig ist. Ist der Überlappungsgrad zu klein, so muß die Ladebeginnmethode ein sofortiges Laden anstoßen und den Überlappungszähler inkrementieren. Dadurch wird die Ladebeginnrechnung von der Speicherlogik sofort wieder aufgerufen, diesmal für einen Folgezylinder entsprechend dem neuen Wert des Überlappungszählers.

Bei einem Segment Überlappung würde also nun auf das Array-Element EL 1 zugegriffen und die Ausgabehardware entsprechend für den Folgezylinder vorinitialisiert. Durch das Einschreiben des aktualisierten Überlappungszählers in die Speicherlogik wird aber nicht nur die Ladebeginnrechnung erneut angetriggert, gleichzeitig findet ein Kopieren des ersten Elementes des Zündwinkelarrays SP1 in den Zündwinkel-FIFO-Speicher SP2 statt. Derartige automatische Speichertransfers sind durch die in modernen Micro-Controllern vorhandenen Burstmechanismen im Bus-Controller in den meisten Fällen möglich (vgl. PEC beim C167-Controller oder dem PTS beim 80C197).

Der Zündwinkel-FIFO-Speicher SP2 wird beim nächsten Aufruf der Drehzahlerfassung von der Speicherlogik automatisch um ein Element nach unten verschoben. Die Zündwinkelausgabe erhält ihren Sollwert immer über das nullte Element EL 0 des Zündwinkel-FIFO-Speichers, so daß von der Zündwinkelberechnung keine weitere Intelligenz benötigt wird. Die Speicherstrukturen können im übrigen auch durch Software realisiert werden.

In Fig. 1 ist ferner dargestellt, daß durch das beschriebene Verfahren der Übergang des Schließbeginns in ein Vorsegment bereits im Vorsegment prognostiziert werden kann. Dabei wird bereits im überlappungsfreien Betrieb der nächstfolgende Wert im Zündwinkelstack interpretiert und mit diesem ebenfalls die Schließbeginnwinkelrechnung durchgeführt.

Stellt sich heraus, daß der Schließbeginn für die Zündung im Folgesegment im aktuellen Segment liegt, so kann sofort auf Überlappung umgeschaltet werden. Verwendet das System nur zwei Interrupts (ein Schließbeginninterrupt und ein Zündinterrupt), so könnte bei stark unterschiedlichen Zündwinkeln und Schließzeiten der Bestromungsbeginn des Folgezylinders vor dem Bestromungsbeginn des aktuellen Zylinders liegen. Ist dieser Fall gegeben, so müßte der Schließbeginn des Folgezylinders auf einem weiteren Ausgabekanal parallel zum Schließbeginn des aktuellen Zylinders gerechnet werden (ein zweiter Schließbeginninterrupt wäre notwendig). Sollte keine weitere Triggereinheit/Interruptkanal zur Verfügung stehen, so ist der Modus der Überlappungsprognose im beschriebenen Verfahren auszuschalten.

Zusammenfassend ist die chronologische Abfolge der obigen Ausführungsform also:

- nach unten Verschieben des FIFO
- Erkennen des überlappungsgrades über Schließzeit, Drehzahl, evtl. Drehzahldynamik, Zündwinkelarray und aktuellem bisherigem Überlappungsgrad
- Einschreiben in den FIFO entsprechend dem erkannten Überlappungsgrad unter Berücksichtigung eines möglichen Überlappungsgradwechsels
- Auslesen des 0-ten FIFO-Elements in die Zündausgabe

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere kann der Steuermechanismus für den Speicherkopiervorgang bzw. -ausgabevorgang hardware- oder softwaremäßig realisiert werden.

Auch ist eine Übertragung auf beliebige Zylinderanzahlen möglich.

**Patentansprüche**

**1.** Zündsteuervorrichtung zum Steuern einer ZündspuLeneinrichtung für eine Brennkraftmaschine mit:

einer Drehzahlerfassungseinrichtung zum Erfassen der Drehzahl der Brennkraftmaschine zu einem Erfassungszeitpunkt innerhalb des Zündzyklus eines jeweiligen Zylinders;

einer Winkelerfassungseinrichtung zum Erfassen des aktuellen Kurbelwinkels der Brennkraftmaschine;

einer Berechnungseinrichtung zum Berechnen eines der erfaßten Drehzahl entsprechenden vorgegebenen Zündwinkels des jeweils nächsten zu zündenden Zylinders und der darauffolgenden Zylinder, einer entsprechenden Ladezeit und eines entsprechenden Ladebeginnwinkels zu einem Berechnungszeitpunkt innerhalb des Zündzyklus eines jeweiligen Zylinders;

einer ersten Speichereinrichtung in Form eines Schreib/Lese-Speichers zum Speichern der jeweils berechneten Zündwinkel aller Zylinder;

einer Überlappungs-Erfassungseinrichtung zum Erfassen einer Überlappung des Zündzyklus der darauffolgenden Zylinder mit dem Zündzyklus des jeweils nächsten zu zündenden Zylinders und zum Festlegen eines entsprechenden Überlappungsgrades;

einer zweiten Speichereinrichtung in Form eines FIFO-Speichers zum Speichern der berechneten Zündwinkel;

einer Kopiereinrichtung zum Kopieren eines jeweiligen Zündwinkels von der ersten Speichereinrichtung in die zweite Speichereinrichtung in Abhängigkeit von dem Überlappungsgrad; und

einer Zündausgabeeinrichtung zum Ausgeben des Zündwinkels des jeweils nächsten zu zündenden Zylinders aus der zweiten Speichereinrichtung und zum Ausgeben der entsprechenden Ladezeit und des entsprechenden Ladebeginnwinkels.

2. Zündsteuervorrichtung nach Anspruch 1, **dadurch gekennzeichnet, daß** eine Prognoseeinrichtung zum Prognostizieren einer Überlappung im folgenden Zündzyklus vorgesehen ist.

3. Zündsteuervorrichtung nach einem der Ansprüche 1 oder 2, **dadurch gekennzeichnet, daß** der Zündwinkel-FIFO-Speicher softwaremäßig in einem Schreib/Lese-Speicher realisiert ist.

4. Zündsteuervorrichtung nach einem der Ansprüche 1, 2 oder 3, **dadurch gekennzeichnet, daß** die Kopiereinrichtung durch einen Burstmechanismus in einem Microcontroller realisiert ist.

5. Zündsteuerverfahren zum Steuern einer Zündspuleneinrichtung für eine Brennkraftmaschine mit den Schritten:

Erfassen der Drehzahl der Brennkraftmaschine zu einem Erfassungszeitpunkt innerhalb des Zündzyklus eines jeweiligen Zylinders;

Erfassen des aktuellen Kurbelwinkels der Brennkraftmaschine;

Berechnen eines der erfaßten Drehzahl entsprechenden vorgegebenen Zündwinkels des jeweils nächsten zu zündenden Zylinders und der darauffolgenden Zylinder, einer entsprechenden Ladezeit und eines entsprechenden Ladebeginnwinkels zu einem Berechnungszeitpunkt innerhalb des Zündzyklus eines jeweiligen Zylinders;

Speichern der jeweils berechneten Zündwinkel aller Zylinder in einer ersten Speichereinrichtung in Form eines Schreib/Lese-Speichers;

Erfassen einer Überlappung des Zündzyklus der darauffolgenden Zylinder mit dem Zündzyklus des jeweils nächsten zu zündenden Zylinders und zum Festlegen eines entsprechenden Überlappungsgrades;

Bereitstellen einer zweiten Speichereinrichtung in Form eines FIFO-Speichers zum Speichern der berechneten Zündwinkel;

Kopieren eines jeweiligen Zündwinkels von der ersten Speichereinrichtung in die zweite Speichereinrichtung in Abhängigkeit von dem Überlappungsgrad; und

Ausgeben des Zündwinkels des jeweils nächsten zu zündenden Zylinders aus der zweiten Speichereinrichtung und zum Ausgeben der entsprechenden Ladezeit und des entsprechenden Ladebeginnwinkels.

**Claims**

1. Ignition controller for controlling an ignition coil device for an internal combustion engine having:

a rotational-speed-sensing device for sensing the rotational speed of the internal combustion engine at a sensing time within the ignition cycle of a respective cylinder;

an angle-sensing device for sensing the current crank angle of the internal combustion engine;

a calculation device for calculating a predefined ignition angle, corresponding to the sensed rotational speed, of the cylinder which is to be respectively fired next, and of the subsequent cylinders, a corresponding charge time and a corresponding start-of-charging angle at a calculation time within the ignition cycle of a respective cylinder;

a first storage device in the form of a write/read memory for storing the respectively calculated ignition angles of all the cylinders;

an overlap-sensing device for sensing overlapping of the ignition cycle of the subsequent cylinders with the ignition cycle of the cylinder which is to be respectively fired next, and for defining a corresponding degree of overlap;

a second storage device in the form of a FIFO memory for storing the calculated ignition angles;

a copying device for copying a respective ignition angle from the first storage device into the second storage device as a function of the degree of overlap; and

an ignition-outputting device for outputting the ignition angle of the cylinder which is to be respectively fired next from the second storage device and for outputting the corresponding charge time and the corresponding start-of-charging angle.

2. Ignition controller according to Claim 1, **characterized in that** a forecast device is provided for forecasting an overlap in the following ignition cycle.

3. Ignition controller according to one of Claims 1 or 2, **characterized in that** the ignition angle FIFO memory is implemented by means of software in a write/read memory.

4. Ignition controller according to one of Claims 1, 2 or 3, **characterized in that** the copying device is implemented by means of a burst mechanism in a microcontroller.

5. Ignition control method for controlling an ignition coil device for an internal combustion engine having the steps:

sensing the rotational speed of the internal combustion engine at a sensing time within the ignition cycle of the respective cylinder;

sensing the current crank angle of the internal combustion engine;

calculating a predefined ignition angle, corresponding to the sensed rotational speed, of the cylinder which is to be respectively fired next, and of the subsequent cylinders, a corresponding charge time and a corresponding start-of-charging angle at a calculation time within the ignition cycle of a respective cylinder;

storing the respectively calculated ignition angles of all the cylinders in a first storage device in the form of a write/read memory;

sensing overlapping of the ignition cycle of the subsequent cylinders with the ignition cycle of the cylinder which is to be respectively fired next, and defining a corresponding degree of overlap;

providing a second storage device in the form of a FIFO memory for storing the calculated ignition angles;

copying a respective ignition angle from the first storage device into the second storage device as a function of the degree of overlap; and

outputting the ignition angle of the cylinder which is to be respectively fired next from the second storage device and outputting the corresponding charge time and the corresponding start-of-charging angle.

**Revendications**

1. Dispositif de commande d'allumage, pour un dispositif d'allumage à bobines, d'un moteur à combustion interne, comprenant :

- un dispositif de détection de la vitesse de rotation du moteur intervenant à un moment du cycle d'allumage du cylindre ;
- un dispositif de détection de l'angle actuel du vilebrequin du moteur ;
- un dispositif de calcul pour établir chaque fois l'angle d'allumage prédéterminé correspondant à la vitesse de rotation détectée du prochain cylindre à allumer, ainsi que du cylindre suivant, un temps de charge correspondant et un angle de début de charge correspondant, le calcul étant effectué à un moment situé à l'intérieur du cycle d'allumage de chaque cylindre ;

- un premier dispositif de mémorisation sous la forme d'une mémoire à accès libre (écriture/lecture) pour enregistrer chaque fois les angles d'allumage calculés pour tous les cylindres ;
- un dispositif de détection du chevauchement d'un cycle d'allumage des cylindres suivants avec chaque fois le cycle d'allumage du prochain cylindre à allumer, avec détermination du degré de chevauchement correspondant ;
- un second dispositif de mémorisation sous la forme d'une mémoire FIFO pour enregistrer les angles d'allumage calculés ;
- un dispositif de copie pour que chacun des angles d'allumage enregistrés dans le premier dispositif de mémorisation, soit copié dans le second dispositif de mémorisation en fonction du degré de chevauchement ;
- et un dispositif de commande d'allumage pour délivrer à partir du second dispositif de mémorisation chaque fois, l'angle d'allumage du prochain cylindre à allumer et pour délivrer le temps de charge correspondant et l'angle de début de charge correspondant.

2. Dispositif de commande d'allumage selon la revendication 1,
   **caractérisé en ce qu'**
   il est prévu un dispositif pour prévoir un chevauchement dans le cycle d'allumage suivant.

3. Dispositif de commande d'allumage selon la revendication 1 et 2,
   **caractérisé en ce que**
   la mémoire FIFO des angles d'allumage est réalisée dans une mémoire à accès direct (écriture/lecture).

4. Dispositif de commande d'allumage selon l'une des revendications 1 à 3,
   **caractérisé en ce que**
   le dispositif de copie est constitué par un dispositif à rafales d'un microcontrôleur.

5. Procédé de commande de l'allumage d'un moteur à combustion interne à allumage par bobines, comportant les étapes suivantes :

   - détecter la vitesse de rotation du moteur, à un moment situé à l'intérieur du cycle d'allumage de chaque cylindre ;
   - détecter l'angle actuel de vilebrequin du moteur ;
   - calculer un angle d'allumage prédéfini correspondant à la vitesse de rotation détectée, pour chaque prochain cylindre à allumer et pour les cylindres suivants, un temps de charge correspondant et d'un angle de début de charge correspondant, le calcul étant effectué à un moment situé à l'intérieur du cycle d'allumage de chaque cylindre ;
- enregistrer chacun des angles d'allumage de tous les cylindres, dans un premier dispositif de mémorisation en forme de mémoire à accès direct (écriture/lecture) ;
- détecter un chevauchement du cycle d'allumage des cylindres suivants avec chaque fois le cycle d'allumage du prochain cylindre à allumer, pour déterminer le degré de chevauchement correspondant;
- disposer d'un second dispositif de mémorisation sous la forme d'une mémoire FIFO, pour enregistrer les angles d'allumage calculés ;
- copier chaque angle d'allumage enregistré dans le premier dispositif de mémorisation, dans le second dispositif de mémorisation en fonction du degré de chevauchement ;
- délivrer à partir du second dispositif de mémorisation, l'angle d'allumage de chaque prochain cylindre à allumer et délivrer le temps de charge correspondant ainsi que l'angle de début de charge correspondant.

# FIG 1

$Z$

| | 0° | | 180° | | 360° | | 540° | | 720° |
|---|---|---|---|---|---|---|---|---|---|

N1, B1 — ①    N2, B2 — ②    N3, B3 — ③    N4, B4 — ④

°kW

EL.

| | | | | | | | | | |
|---|---|---|---|---|---|---|---|---|---|
| 0 | Z1 | -10° | Z2 | 10° | Z3 | 15° | Z4 | 15° |
| 1 | Z2 | 5° | Z3 | 15° | Z4 | 15° | Z1 | -10° |
| 2 | Z3 | 5° | Z4 | 15° | Z1 | -10° | Z2 | 15° |
| 3 | Z4 | 5° | Z1 | -10° | Z2 | 15° | Z3 | 15° |

SP1

$\ddot{U} = 0$     $\ddot{U} = 1$     $\ddot{U} = 1$     $\ddot{U} = 1$

EL.

OUT

| | | | | | | | | | |
|---|---|---|---|---|---|---|---|---|---|
| 0 | Z1 | -10° | Z2 | 10° | Z3 | 15° | Z4 | 15° |
| 1 | Z2 | - | Z3 | 15° | Z4 | 15° | Z1 | -10° |
| 2 | Z3 | - | Z4 | - | Z1 | - | Z2 | - |
| 3 | Z4 | - | Z1 | - | Z2 | - | Z3 | - |

SP2

IN

## FIG 2

## FIG 3